# EUROPEAN PATENT APPLICATION

(11) **EP 4 542 392 A1**
(43) Date of publication of application: **23.04.2025**
(21) Application number: 24207186.8
(22) Date of filing: 17.10.2024
(51) Int. Cl.: G06F 9/50

(54) **METHODS AND APPARATUS TO ALLOCATE RESOURCES IN A CLOUD ENVIRONMENT**

(30) Priority: 18.10.2023 US 202318489656
(71) Applicant: VMware LLC, Palo Alto, CA 94304 (US)
(72) Inventor: Genchev, Stoyan Staykov, 1700 Sofia (BG); Dzhigarov, Marin Stoyanov, 1151 Sofia (BG); Raikov, Ventsyslav, 1797 Sofia (BG); Shreekanth, Akshay, Palo Alto, 94304 (US); Fang, Jiahao, Palo Alto, 94304 (US); Dimitrov, Alexander, 1797 Sofia (BG); Todorov, Atanas, 1797 Sofia (BG)
(74) Representative: Dilg, Haeusler, Schindelmann Patentanwaltsgesellschaft mbH

(57) **Abstract**

Systems, apparatus, articles of manufacture, and methods are disclosed to analyze resource dependencies, the apparatus comprising: interface circuitry; machine readable instructions; and programmable circuitry to at least one of instantiate or execute the machine readable instructions to: generate a self-contained dependency descriptor property based on a dependency between a first cloud resource and a second cloud resource; receive a resource allocation request, the resource allocation request indicative of a first cloud resource account type, the resource allocation request not specific to a cloud provider; based on the self-contained dependency descriptor property, determine a second cloud resource account type to satisfy the resource allocation request; determine the cloud provider based on a property associated with a first resource type and a second resource type; and determine a cloud resource based on the cloud provider, the cloud resource to be allocated in response to the resource allocation request.

## Description

### FIELD OF THE DISCLOSURE

This disclosure relates generally to cloud computing and, more particularly, to methods and apparatus to allocate resources in a cloud environment.

### BACKGROUND

Cloud templates are used in resource allocation in cloud infrastructures by streamlining the processes of provisioning and managing virtual resources. Infrastructures can be implemented using scalable on-demand resources based on cloud templates that define, provision, and manage cloud resources in a programmable and repeatable manner.

### BRIEF DESCRIPTION OF THE DRAWINGS

FIG. 1 is a block diagram of an example multi-cloud self-service environment in which an example automation platform operates to manage cloud resources.
FIG. 2 is a diagram of an example implementation of a cloud template created in the multi-cloud self-service environment of FIG. 1.
FIG. 3 is a directed graph representative of the cloud template of FIG. 2.
FIG. 4 is a flowchart representative of example machine readable instructions and/or example operations that may be executed, instantiated, and/or performed by example programmable circuitry to implement the dependency analyzer of FIG. 1.
FIG. 5 is a flowchart representative of example machine readable instructions and/or example operations that may be executed, instantiated, and/or performed by example programmable circuitry to implement the account type determiner of FIG. 1.
FIG. 6 is a flowchart representative of example machine readable instructions and/or example sub-operations that may be executed, instantiated, and/or performed by example programmable circuitry to implement the resource dependency determination of FIG. 4.
FIG. 7 is a flowchart representative of example machine readable instructions and/or example sub-operations that may be executed, instantiated, and/or performed by example programmable circuitry to implement the cloud account type determination of FIG. 5.
FIG. 8 is a block diagram of an example processing platform including programmable circuitry structured to execute, instantiate, and/or perform the example machine readable instructions and/or perform the example operations of FIGS. 4, 5, 6, and 7 to implement the dependency analyzer and/or account type determiner of FIG. 1.
FIG. 9 is a block diagram of an example implementation of the programmable circuitry of FIG. 8.
FIG. 10 is a block diagram of another example implementation of the programmable circuitry of FIG. 8.

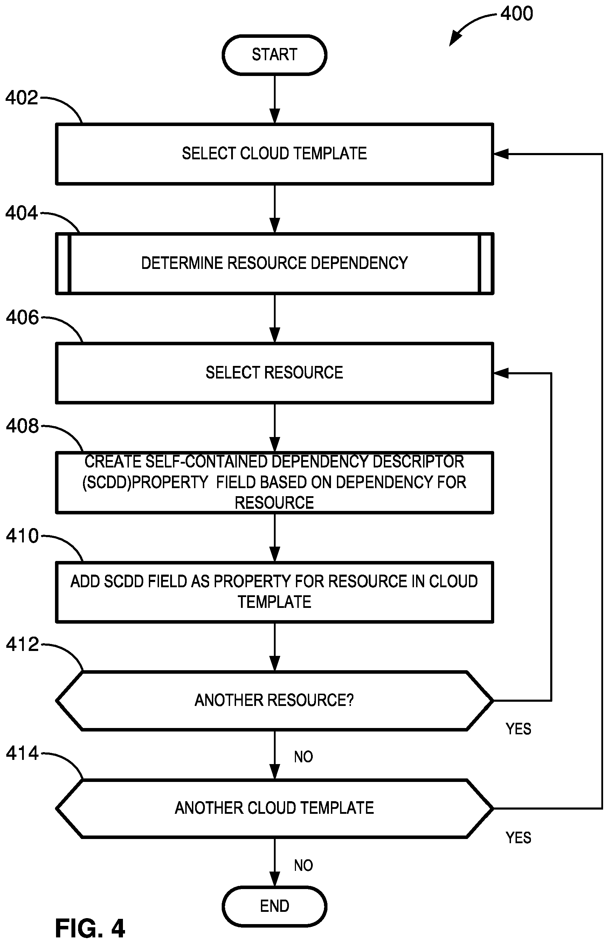

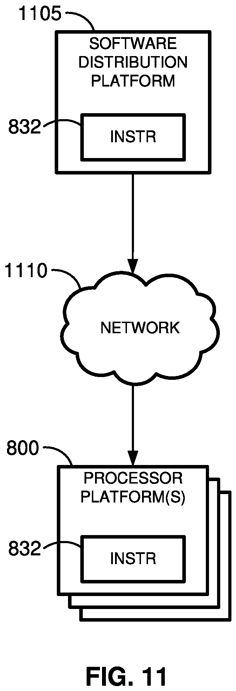

FIG. 11 is a block diagram of an example software/firmware/instructions distribution platform (e.g., one or more servers) to distribute software, instructions, and/or firmware (e.g., corresponding to the example machine readable instructions of FIGS. 4, 5, 6, and 7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Cloud templates are preconfigured blueprints that define the architecture and specifications of virtual resources in cloud computing environments. The cloud templates serve as a foundation for creating virtual machines, containers, and/or other cloud resources with consistent and reproducible settings. Cloud templates encompass various aspects of resource specifications including virtual machines, networking parameters, and application settings. Cloud templates enable organizations to allocate computing resources by providing a standardized way to deploy applications and/or services. The standardization of deploying applications and/or services allows for resource management and customization to satisfy workload requirements.

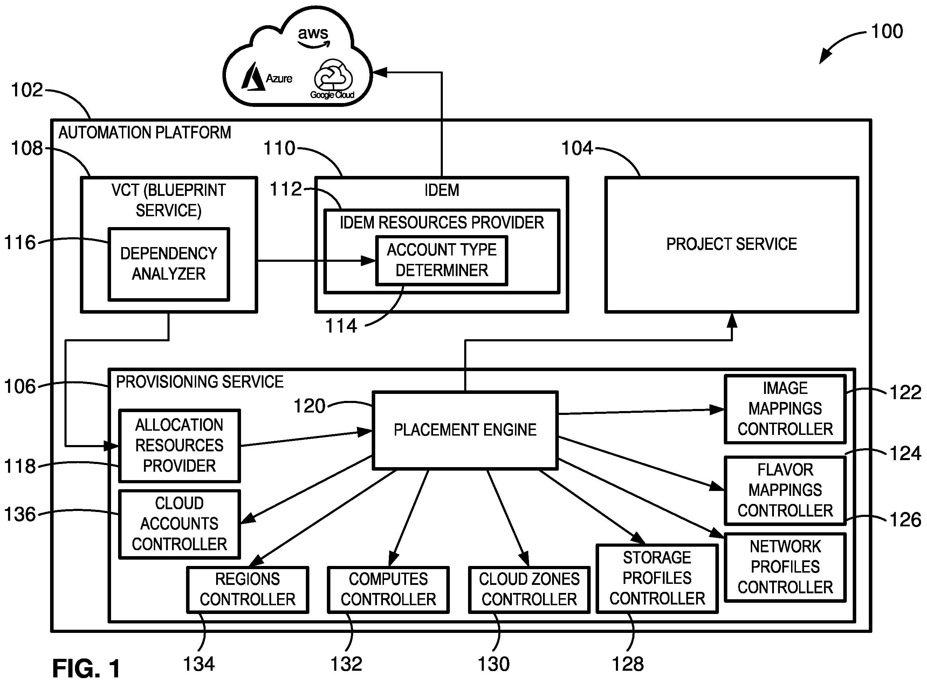

FIG. 1 is a block diagram of an example multi-cloud self-service environment 100 in which an example automation platform 102 operates to manage cloud resources. The example automation platform 102 includes a project service 104, a provisioning service 106, a blueprint service 108, and an Idempotent (IDEM) service 110.

The example project service 104 is a service or functionality that allows users to organize, define, and/or execute automation projects. The automation projects include a series of tasks or workflows to achieve an objective within a cloud infrastructure. The example project service 104 functions to perform workflow design, resource allocation, scheduling, monitoring, reporting, and error handling.

The example provisioning service 106 is provided to create and/or manage cloud resources based on instructions provided by the blueprint service 108 and the IDEM service 110. The example provisioning 106 service interprets data from the IDEM service 110, accesses cloud infrastructure, and allocates resources in accordance with data from the IDEM service 110. The example provisioning service 106 transforms cloud templates into functioning resources. The example provisioning service 106 includes an allocation resources provider 118, a placement engine 120, image mappings controller 122, flavor mappings controller 124, network profiles controller 126, storage profiles controller 128, cloud zones controller 130, computes controller 132, regions controller 134, and cloud accounts controller 136.

The example allocation resource provider 118 coordinates and/or manages allocations of cloud resources and ensures that the correct resources are allocated according to project requirements. The example placement engine 120 determines where to allocate cloud resources in a cloud infrastructure, optimizing placement for performance and/or resource utilization. The image mappings controller 122 manages mappings between blueprint specifications and available machine images, ensuring the correct image is used during resource provisioning. The example flavor mappings controller 124 handles mappings between blueprint specifications and available resource configurations or flavors. The example network profiles controller 126 manages network settings and configurations for allocated resources and ensures the correct network setup for each task to be performed. The example storage profiles controller 128 controls storage configurations and/or mappings between blueprints and available storage options. The example cloud zones controller 130 defines and/or manages different cloud zones or regions within the cloud infrastructure to allow for resource allocations in specific geographical zones. The example computes controller 132 manages compute resources, such as virtual machines and/or containers. The example regions controller 134 handles the allocation of resources across different geographical regions or data centers. The example cloud accounts controller 136 manages integration and/or authentication with various cloud provider accounts to allow access to cloud resources.

The example blueprint service 108 is a component of the automation platform 102 that leverages cloud templates. The example blueprint service 108 operates as an orchestrator to define, manage, and/or apply cloud templates to create cloud resources. The example blueprint service 108 provides an interface that may be used to select and customize templates to satisfy specific workload needs and ensures that the allocation of cloud resources aligns with the requirements specified in the templates. The example blueprint service 108 includes a dependency analyzer 116. The example dependency analyzer 116 determines resource dependencies in a cloud template and adds self-contained dependency descriptor fields as properties for resources in the cloud template.

The example Idempotent (IDEM) service 110 is a cloud environment manager. The example IDEM service 110 manages connections between cloud templates and the provisioning service 106. The example IDEM service 110 applies an operation a given number of times to reach a desired cloud environment state without producing an unwanted outcome (e.g., running a "create" operation multiple times results in the creation of a single resource). The example IDEM service 110 includes an IDEM resources provider 112, which in turn includes an account type determiner 114. The example IDEM resources provider 112 handles IDEM data and resources and facilitates communication between various components. The example account type determiner 114 receives allocation resource requests, checks a self-contained dependency descriptor field, determines a cloud account type for the requested allocation resource, and instructs the placement engine 120 to search for the determined cloud account type. In examples disclosed herein, cloud account type refers to a particular provider of cloud services. For example, a company ABC, Inc. cloud service provider is represented by a company ABC, Inc cloud account type. A company XYZ, Inc. cloud service provider is represented by a company XYZ cloud account type. Example cloud service providers in today's cloud services market that could be represented by different cloud account types include Amazon Web Services (AWS) and Microsoft Azure.

Identifying cloud account types, as disclosed herein, is useful when deploying resources because selecting resources that correspond to the same cloud account types of dependent resources and/or of resources on which newly deployed resources will depend prevents or substantially reduces the likelihood of deploying a resource that is incompatible with already deployed resources in the same environment from a cloud service provider perspective. For example, if a deployed cloud environment includes cloud resource of account type "company ABC," deploying a dependent resource of cloud account type "company XYZ" would create an incompatibility between dependent resources based on the resources being of different cloud account types.

Each of the automation platform 102, project service 104, provisioning service 106, blueprint service 108, IDEM service 110, IDEM resources provider 112, account type determiner 114, dependency analyzer 116, allocation resources provider 118, placement engine 120, image mappings controller 122, flavor mappings controller 124, network profiles controller 126, storage profiles controller 128, cloud zones controller 130, computes controller 132, regions controller 134, and cloud accounts controller 136 may be instantiated (e.g., creating an instance of, bring into being for any length of time, materialize, implement, etc.) by programmable circuitry such as a Central Processor Unit (CPU) executing first instructions. Additionally or alternatively, each of the automation platform 102, project service 104, provisioning service 106, blueprint service 108, IDEM service 110, IDEM resources provider 112, account type determiner 114, dependency analyzer 116, allocation resources provider 118, placement engine 120, image mappings controller 122, flavor mappings controller 124, network profiles controller 126, storage profiles controller 128, cloud zones controller 130, computes controller 132, regions controller 134, and cloud accounts controller 136 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 1 may, thus, be instantiated at the same or different times. Some or all of the circuitry of FIG. 1 may be instantiated, for example, in one or more threads executing concurrently on hardware and/or in series on hardware. Moreover, in some examples, some or all of the circuitry of FIG. 1 may be implemented by microprocessor circuitry executing instructions and/or FPGA circuitry performing operations to implement one or more virtual machines and/or containers.

In some examples, the dependency analyzer 116 is instantiated by programmable circuitry executing dependency analyzer instructions and/or configured to perform operations such as those represented by the flowchart of FIG. 4.

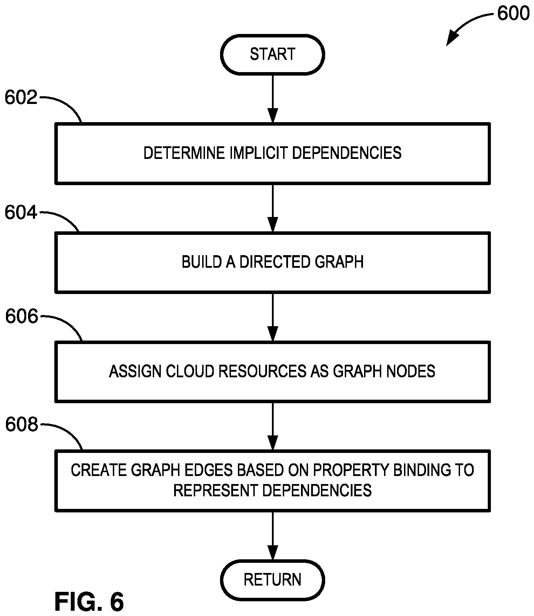

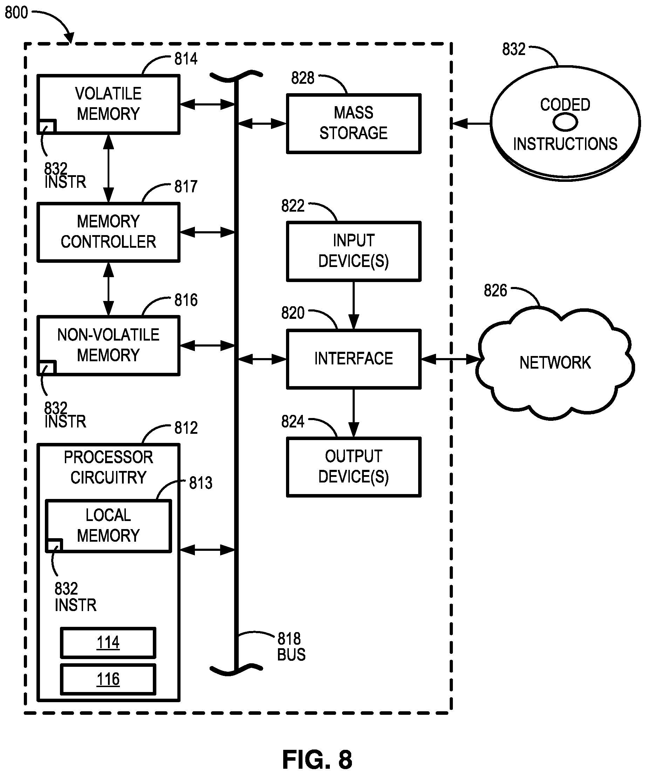

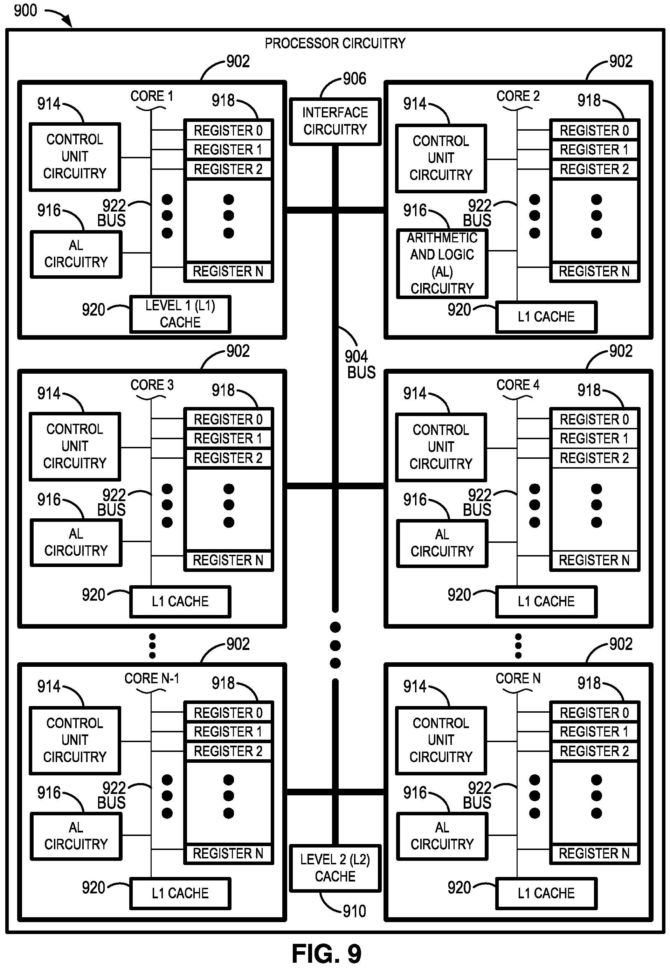

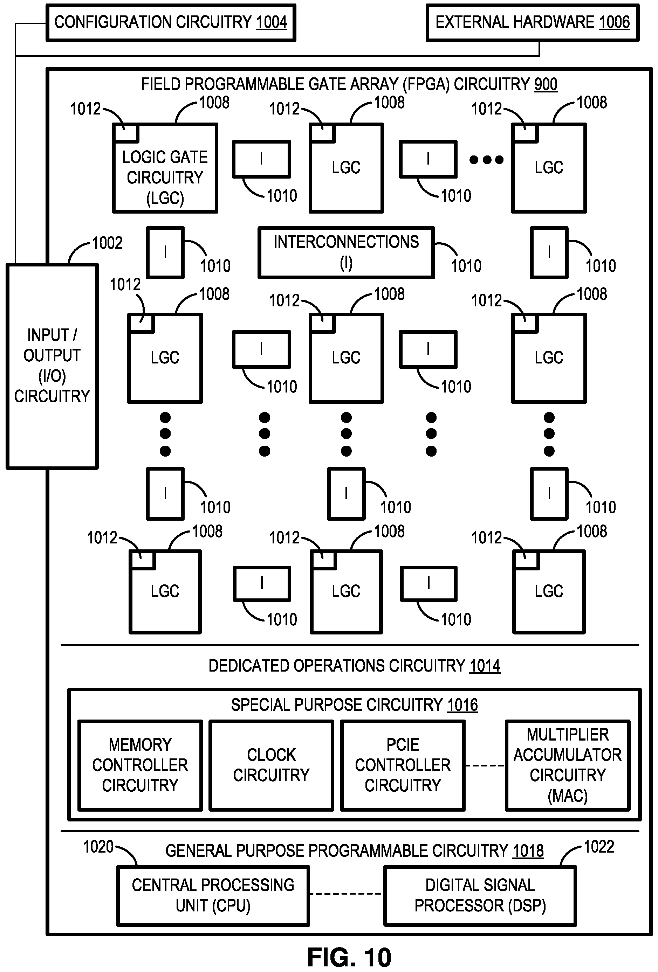

In some examples, the dependency analyzer 116 includes means for determining and analyzing cloud resource dependencies. For example, the means for determining may be implemented by dependency analyzer circuitry such as the dependency analyzer 116. In some examples, the dependency analyzer 116 may be instantiated by programmable circuitry such as the example programmable circuitry 812 of FIG. 8. For instance, the dependency analyzer 116 may be instantiated by the example microprocessor 900 of FIG. 9 executing machine executable instructions such as those implemented by at least blocks 602, 604, 606, and 608 of FIG. 6. In some examples, the dependency analyzer 116 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the dependency analyzer 116 may be instantiated by any other combination of hardware, software, and/or firmware. For example, the dependency analyzer 116 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the dependency analyzer 116 is illustrated in FIG. 1, one or more of the elements, processes, and/or devices illustrated in FIG. 1 may be combined, divided, re-arranged, omitted, eliminated, and/or implemented in any other way. Further, the example dependency analyzer 116 of FIG. 1, may be implemented by hardware alone or by hardware in combination with software and/or firmware. Thus, the example dependency analyzer 116 could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example dependency analyzer 116 of FIG. 1 may include one or more elements, processes, and/or devices in addition to, or instead of, those illustrated in FIG. 1, and/or may include more than one of any or all of the illustrated elements, processes and devices.

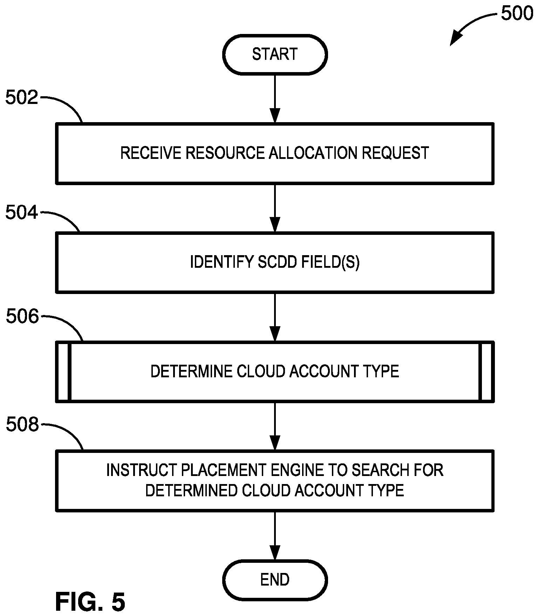

In some examples, the account type determiner 114 is instantiated by programmable circuitry executing account type determiner instructions and/or configured to perform operations such as those represented by the flowchart(s) of FIG. 5.

In some examples, the account type determiner 114 includes means for determining a cloud account type. For example, the means for determining may be implemented by account type determiner circuitry such as the account type determiner 114. In some examples, the account type determiner 114 may be instantiated by programmable circuitry such as the example programmable circuitry 812 of FIG. 8. For instance, the account type determiner 114 may be instantiated by the example microprocessor 900 of FIG. 9 executing machine executable instructions such as those implemented by at least blocks 502, 504, 506, and 508 of FIG. 5. In some examples, the account type determiner 114 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the account type determiner 114 may be instantiated by any other combination of hardware, software, and/or firmware. For example, the account type determiner 114 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the account type determiner 114 is illustrated in FIG. 1, one or more of the elements, processes, and/or devices illustrated in FIG. 1 may be combined, divided, re-arranged, omitted, eliminated, and/or implemented in any other way. Further, the example account type determiner 114 of FIG. 1, may be implemented by hardware alone or by hardware in combination with software and/or firmware. Thus, for example, the account type determiner 114, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example account type determiner 114 of FIG. 1 may include one or more elements, processes, and/or devices in addition to, or instead of, those illustrated in FIG. 1, and/or may include more than one of any or all of the illustrated elements, processes and devices.

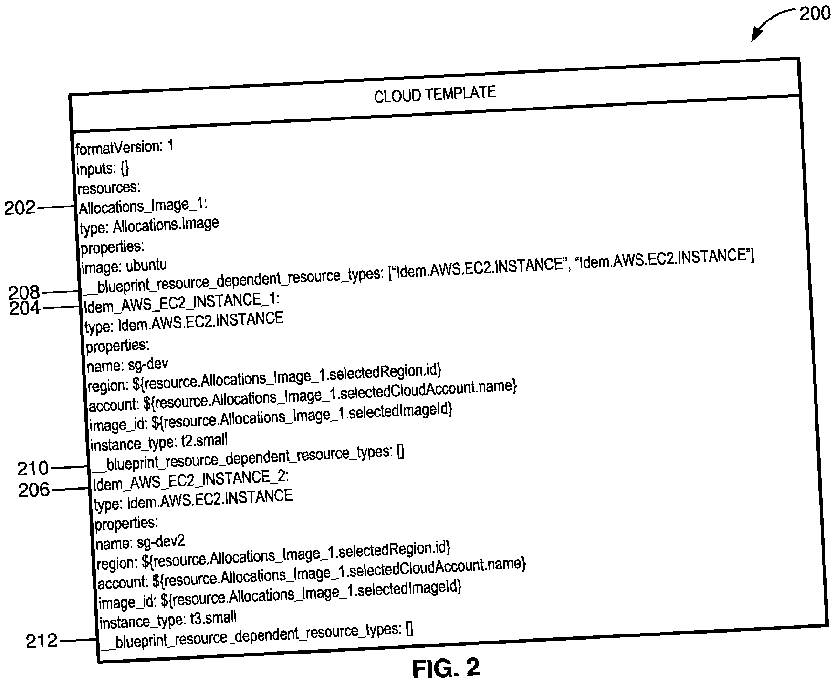

FIG. 2 is an example diagram of a cloud template 200 which uses an infrastructure as code (IaC) tool like Amazon Web Services (AWS) CloudFormation or Terraform. The example cloud template 200 is used in a cloud computing environment to define and provision cloud resources and services. For example, resources an Allocations_Image_1 resource 202, an Idem AWS EC2 INSTANCE_1 resource 204, and an Idem_AWS_EC2_INSTANCE_2 resource 206 are represented in the cloud template 200 of FIG. 2. For each resource 202, 204, and 206, the resource type and resource properties of the resource are defined in the cloud template 200. Example resource types include images and instances. Example resource properties include a name, a region, an account, an image identification, and an instance type. The example resource types and resource properties are examples and not an exhaustive list.

Additional resource properties may be introduced to resources (e.g., the resources 202, 204, and 206). In examples disclosed herein, a _blueprint_resource_dependent_resource_types resource property 208, 210, 212 is added to the cloud template 200 as a self-contained dependency descriptor (SCDD) for each resource defined in the cloud template 200. In examples disclosed herein, an added SCDD property for resources represented in cloud templates enables determining what resources depend from other resources without needing to rely on such dependency information from parties requesting allocations of resource. In addition, the SCDD property disclosed herein enables determining cloud account types of resources without needing to rely on parties that are requesting resources to provide sch cloud account type information for the requested resources.

The _blueprint_resource_dependent_resource_types property 208, 210, 212 is defined for a corresponding cloud resource to include the cloud resource account type of all resources that depend from the first cloud resource. As an example, the cloud resource Idem_AWS_EC2_INSTANCE1 204 has the region, account, and image_id (image identification) resource properties as dependent on the Allocations Image_1 cloud resource 202 by defining a value of region as ${resource.Alloctions_Image_1.selectedRegion.id}, a value of account as ${resource.Alloctions_Image_1.selectedCloudAccount.name}, and a value of image_id as ${resource.Alloctions_Image_1.selectedImageID}. By defining the values as values dependent on values associated with the cloud resource Allocations Image_1 202, the cloud resource Idem AWS EC2 INSTANCE_1 204 is dependent on the cloud resource Allocations Image_1 202. In this example, the cloud account type of the example Idem AWS EC2 INSTANCE_1 204 is represented by the type (IDEM.AWS.EC2.INSTANCE) to be AWS.

The dependency is mathematically mapped out by the dependency analyzer 116 of FIG. 1, which generates a directed graph to represent the dependencies. After the dependencies are mathematically represented and mapped out, the value of the _blueprint_resource_dependent_resource_types resource property 208 is allocated as the resource type of the resources dependent on the cloud resource Allocation Image_1 202. Since the determination of the dependencies is applied for all resources, the example cloud resource Idem_AWS_EC2_INSTANCE_2 206 is evaluated as well. The cloud resource account type is the same for the cloud resource Idem_AWS_EC2_INSTANCE_1 204 and for the cloud resource Idem_AWS_EC2_INSTANCE_2 206. Therefore, the _blueprint_resource_dependent_resource_types resource property 208 shows "Idem.AWS.EC2.INSTANCE" as the obtained value twice.

The process of evaluating dependencies and adding the _blueprint_resource_dependent_resource_types resource property 208, 210, 212 is repeated for the available resources in the cloud template 200. For the cloud resource Idem AWS EC2 INSTANCE_1 204, the _blueprint_resource_dependent_resource_types resource property 210 is added. As there are no resources depending from the cloud resource Idem AWS EC2 INSTANCE_1 204, the value of the _blueprint_resource_dependent_resource_types resource property 210 is blank. For the cloud resource Idem_AWS_EC2_INSTANCE_2 206, the _blueprint_resource_dependent_resource_types resource property 212 is added. As there are no resources depending from the cloud resource Idem_AWS_EC2_INSTANCE_2 206, the value of the _blueprint_resource_dependent_resource_types resource property 212 is blank.

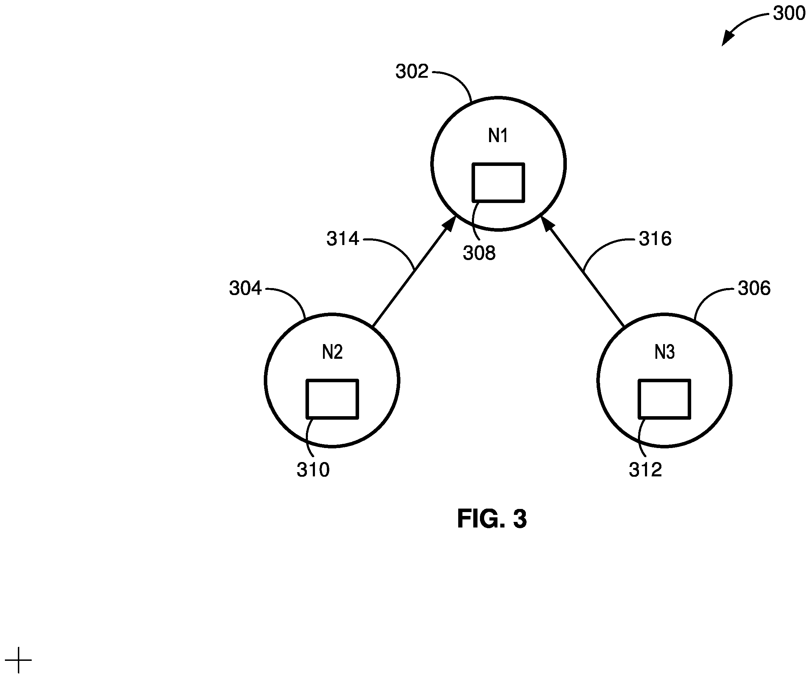

FIG. 3 is an example directed graph 300 built by the dependency analyzer 116 of FIG. 1. A directed graph is a representation of a set of nodes 302, 304, 306 connected by edges 314, 316. In example FIG. 3, the directed graph 300 is a node-based dependency representation of resources in a cloud template such as the cloud template 200 of FIG. 2. As such, the node N1 302 may represent the cloud resource Allocation Image_1 202 of FIG.2, the node N2 304 may represent the cloud resource Idem AWS EC2 INSTANCE_1 204, the node N3 306 may represent the cloud resource Idem_AWS_EC2_INSTANCE_2 206 of FIG. 2.

The directions of the edges 314, 316 indicate the relationships between the nodes 302, 304, 306. For example, in the directed graph 300 of FIG. 3, resources N2 304 and N3 306 depend on N1 302, meaning node N1 302 represents a primary resource or a central entity in the graph. Nodes N2 304 and N3 306 are dependent on node N1 302. Nodes N2 304 and N3 306 are dependent nodes, meaning that actions or changes in node N1 302 can impact nodes N2 304 and N3 306. After the dependency analyzer 116 determines or establishes the dependencies of the nodes N2 304 and N3 306 on node N1 302, the dependency analyzer 116 creates corresponding SCDD properties 308, 310, 312 for corresponding ones of the resources N1 302, N2 304, N3 306. The example dependency analyzer includes the resource type that depends on each dependent resource node 302, 304, 306 in the SCDD properties 308, 310, 312. In the example of FIG. 3, the resource types of the resources allocated to the nodes N2 304 and N3 306 are the values for the SCDD property 308 created for the resource associated with the node N1 302. Since the example node N2 304 does not have any dependent resources, the SCDD property 310 created for the resource associated with the node N2 304 is blank. Since the example node N3 306 does not have any dependent resources, the SCDD property 312 created for the resource associated with the node N3 312 is blank. As resources are added to a cloud template (e.g., the cloud template 200 of FIG. 2), the SCDD properties 308, 310, 312 are automatically updated by the dependency analyzer 116 of FIG. 1.

Although one parent node (N1 302) and two child nodes (N2 304 and N3 306) are shown in the example of FIG. 3, examples disclosed herein may be used in connection with any number of parent nodes and/or any number of child nodes.

Flowcharts representative of example machine readable instructions, which may be executed by programmable circuitry to implement and/or instantiate the dependency analyzer 116 and the account type determiner 114 of FIG. 1 and/or representative of example operations which may be performed by programmable circuitry to implement and/or instantiate the dependency analyzer 116 and the account type determiner 114 of FIG. 1, are shown in FIGS. 4, 5, 6, and 7. The machine readable instructions may be one or more executable programs or portion(s) of one or more executable programs for execution by programmable circuitry such as the programmable circuitry 812 shown in the example processor platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4, 5, 6, and 7, many other methods of implementing the example dependency analyzer 116 and account type determiner 114 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4, 5, 6, and 7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 4 is a flowchart representative of example machine readable instructions and/or example operations 400 that may be executed, instantiated, and/or performed by programmable circuitry to create a property to identify resource dependencies in a cloud template. The example machine-readable instructions and/or the example operations 400 of FIG. 4 begin at block 402, at which the dependency analyzer 116 (FIG. 1) selects a cloud template. For example, the dependency analyzer 116 may select the cloud template 200 of FIG. 2. the example dependency analyzer 116 determines the cloud resource dependencies in the cloud template (block 404). For example, the dependency analyzer 116 determines dependencies of the resource 204 and the resource 206 of FIG. 2 on the resource 202 of FIG. 2. example machine readable instructions and/or example operations that may be executed, instantiated, and/or performed by programmable circuitry to implement block 404 are described below in connection with FIG. 6.

The example dependency analyzer 116 selects a cloud resource (block 406). For example, the dependency analyzer 116 selects one of the resources 202, 204, 206 from the cloud template 200 of FIG. 2. The dependency analyzer 116 creates a self-contained dependency descriptor (SCDD) property field based on the dependencies of the selected cloud resource (block 408). For example, the dependency analyzer 116 creates a corresponding one of the SCDD properties 208, 210, 212 of the cloud template 200 of FIG. 2 for the selected one of the resources 202, 204, 206. The SCDD property field contains the types of the resources which reference the selected resource. The example dependency analyzer 116 adds the SCDD field as a cloud resource property in the cloud template in association with the selected resource (block 410).

The example dependency analyzer 116 determines whether there is any additional resource represented in the selected cloud template for which an SCDD property should be created (block 412). If a resource is yet to be analyzed (block 412: YES), control returns to block 406. Otherwise (block 412: NO) the example dependency analyzer 116 determines whether there is another cloud template to process (block 414). For example, the instructions and/or operations 400 of FIG. 4 may be used to process one or more libraries of cloud templates to add SCDD properties for resource represented in those cloud templates. If a cloud template remains to be processed (block 414), control returns to block 406. Otherwise, (block 414: NO) the instructions and/or operations 400 end.

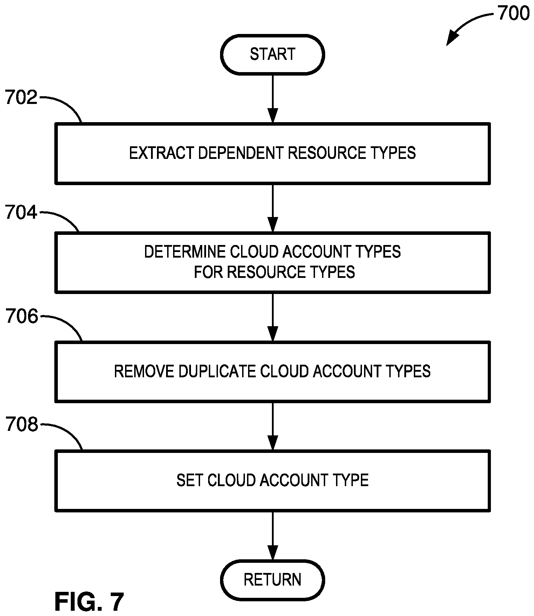

FIG. 5 is a flowchart representative of example machine readable instructions and/or example operations 500 that may be executed, instantiated, and/or performed by programmable circuitry to determine an associated cloud account type for provisioning resolution. The example machine-readable instructions and/or the example operations 500 of FIG. 5 begin at block 502, at which the account type determiner 114 (FIG. 1) receives a resource allocation request. The resource allocation request is indicative of a first cloud resource type, but the resource allocation request is not specific to a cloud provider. For example, the account type determiner 114 may receive a request from the blueprint service (e.g., blueprint service 108 of FIG. 1) for a specific allocation resource but not for a cloud provider. the example account type determiner 114 identifies any SCDD property fields introduced by the dependency analyzer 116 (block 504). For example, the account type determiner 114 may identify one or more of the SCDD properties 208, 210, 212 of the cloud template 200 of FIG. 2. The example account type determiner 114 determines a cloud account type represented in the SCDD property field (block 506). Example machine readable instructions and/or example operations that may be executed, instantiated, and/or performed by programmable circuitry to implement block 506 are described below in connection with FIG. 7. The example account type determiner 114 instructs the placement engine 120 (FIG. 1) to search for the cloud account type determined by the account type determiner 114 at block 506 when considering one or more resources for selection by the placement engine (block 508). For example, since the SCDD property(ies) 208, 210, 212 is/are self-contained in the cloud template 200, the account type determiner 114 can readily access the cloud account type of any dependent resource without needing to rely on external user input (e.g., inputs from administrators, developers, etc.) for such information. Instead, the account type determiner 114 can use the cloud account type in the SCDD property field(s) to identify available resources in a resource pool that match the identified cloud account type. The example allocation resource provider 118 (FIG. 1) allocates a resource to satisfy the resource allocation request of block 502. For example, the allocation resource provider 118 allocates a resource selected by the placement engine 120 at block 508. The example instructions and/or operations 500 end.

FIG. 6 is a flowchart representative of example machine readable instructions and/or example operations 600 that may be executed, instantiated, and/or performed by programmable circuitry to determine the dependencies of cloud resources within a cloud template. The example machine-readable instructions and/or the example operations 600 of FIG. 6 may be used to implement block 404 of FIG. 4. At block 602, the example dependency analyzer 116 (FIG. 1) determines implicit dependencies of cloud resources in a cloud template (e.g., the cloud template 200 of FIG.2). In examples disclosed herein, an implicit dependency of a cloud resource refers to a relationship or reliance that exists between a first resource and a second resource or component within a cloud environment that is not explicitly defined or documented. In other words, the dependency is not formally specified but determines functioning of the resource. Implicit dependencies can arise in cloud environment due to various factors including network dependencies, timing dependencies, data dependencies, load dependencies, and/or security dependencies. For example, a first resource may be related to a second resource because they have the same property definition.

The example dependency analyzer 116 builds a directed graph (block 604). For example the dependency analyzer 116 builds the directed graph 300 of FIG. 3. the example dependency analyzer 116 assigns cloud resources of the selected cloud template from the flowchart of FIG. 4 to be represented as graph nodes in the directed graph (block 606). The example dependency analyzer 116 connects the graph nodes by graph edges based on property bindings to represent dependencies (block 608). In examples disclosed herein, property bindings are properties that are bound to each other by one property referencing another, or through an implicit property. In examples disclosed herein, an implicit property corresponds to two properties that are the same or have the same value, such as the same account value, the same region value, or the same image identification value. The example instructions and/or operations 600 end and control returns to the example instructions and/or operations 400 of FIG. 4.

FIG. 7 is a flowchart representative of example machine readable instructions and/or example operations 700 that may be executed, instantiated, and/or performed by programmable circuitry to deduce the cloud account type whose properties should be considered by the placement engine. The example machine-readable instructions and/or the example operations 700 of FIG. 7 may be used to implement block 506 of FIG. 5. At block 702, the example account type determiner 114 (FIG. 1) extracts dependent resource types from a selected cloud resource by accessing the SCDD property field created by the dependency analyzer 116 (FIG. 1). The example account type determiner 114 determines the cloud account type for each of the extracted dependent resource types based on the mapped cloud account provider to the resource type (block 704). The example account type determiner 114 removes the duplicate cloud account types from a created list of cloud account types (block 706). The example account type determiner 114 determines a single cloud account type that can be set for the provisioning of a cloud resource based on the selected cloud template (block 708). For example, the account type determiner 114 accesses a resource and the created SCDD property field. The example account type determiner 114 accesses each of the dependent resources to determine the cloud account type for each resource. The example account type determiner 114 determines the cloud account type for each of the extracted dependent resources to add to a list. The example account type determiner 114 then removes duplicates from the list to result in one cloud account type that can be set for the provisioning of a cloud resource based on the selected cloud template. The example instructions and/or operations 700 of FIG. 7 end and control returns to the instructions and or operations 400 of FIG. 4.

FIG. 8 is a block diagram of an example programmable circuitry platform 800 structured to execute and/or instantiate the example machine-readable instructions and/or the example operations of FIGS. 4, 5, 6, and 7 to implement the dependency analyzer 116 and the account type determiner 114 of FIG. 1. The programmable circuitry platform 800 can be, for example, a server, a personal computer, a workstation, a self-learning machine (e.g., a neural network), or any other suitable type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the dependency analyzer 116 and the account type determiner 114.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 832, which may be implemented by the machine readable instructions of FIGS. 4, 5, 6, and 7, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIGS. 4, 5, 6, and 7 to effectively instantiate the circuitry of FIG. 2 as logic circuits to perform operations corresponding to those machine readable instructions. In some such examples, the circuitry of FIG. 1 is instantiated by the hardware circuits of the microprocessor 900 in combination with the machine-readable instructions. For example, the microprocessor 900 may be implemented by multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 4, 5, 6, and 7.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI) bus, a PCI bus, or a PCIe bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowchart(s) of FIGS. 4, 5, 6, and 7 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4, 5, 6, and 7. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4, 5, 6, and 7. As such, the FPGA circuitry 1000 may be configured and/or structured to effectively instantiate some or all of the operations/functions corresponding to the machine readable instructions of the flowcharts of FIGS. 4, 5, 6, and 7 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 4, 5, 6, and 7 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 4, 5, 6, and 7 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 9. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine readable instructions represented by the flowchart(s) of FIGS. 4, 5, 6, and 7 to perform first operation(s)/function(s), the FPGA circuitry 1000 of FIG. 10 may be configured and/or structured to perform second operation(s)/function(s) corresponding to a second portion of the machine readable instructions represented by the flowcharts of FIG. 4, 5, 6, and 7, and/or an ASIC may be configured and/or structured to perform third operation(s)/function(s) corresponding to a third portion of the machine readable instructions represented by the flowcharts of FIGS. 4, 5, 6, and 7.

It should be understood that some or all of the circuitry of FIG. [ER-Diagram] may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. [ER-Diagram] may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. [ER-Diagram] may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 832 of FIG. 8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine readable instructions 832, which may correspond to the example machine readable instructions of FIGS. 4, 5, 6, and 7, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 832 from the software distribution platform 1105. For example, the software, which may correspond to the example machine readable instructions of FIG. 4, 5, 6, and 7, may be downloaded to the example programmable circuitry platform 800, which is to execute the machine readable instructions 832 to implement the dependency analyzer 116 and the account type determiner 114. In some examples, one or more servers of the software distribution platform 1105 periodically offer, transmit, and/or force updates to the software (e.g., the example machine readable instructions 832 of FIG. 8) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise"

(e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (CPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that improve provisioning resolution and evaluating resource dependencies for cloud resources represented in a cloud template. Disclosed systems, apparatus, articles of manufacture, and methods improve the efficiency of using a computing device by resolving provisioning errors, reducing computing overhead during resource allocation, reducing the number of computer processing unit cycles, reducing the amount of memory required, reducing the number of network calls (e.g., the amount of data transfer between different components or services within a cloud-based infrastructure), and reducing the number of database calls (e.g., the amount of requests made to a database service hosted in a cloud) by adding SCDD property fields for resources represented in cloud templates to substantially reduce or eliminate the need to obtain information in the SCDD properties from sources external to the cloud templates. Disclosed systems, apparatus, articles of manufacture, and methods are accordingly directed to one or more improvement(s) in the operation of a machine such as a computer or other electronic and/or mechanical device.

Example 1 includes an apparatus to analyze resource dependencies, the apparatus comprising interface circuitry, machine readable instructions, and programmable circuitry to at least one of instantiate or execute the machine readable instructions to generate a self-contained dependency descriptor property based on a dependency between a first cloud resource and a second cloud resource, receive a resource allocation request, the resource allocation request indicative of a first cloud resource account type, the resource allocation request not specific to a cloud provider, based on the self-contained dependency descriptor property, determine a second cloud resource account type to satisfy the resource allocation request, determine the cloud provider based on a first resource type and a second resource type, and determine a cloud resource based on the cloud provider, the cloud resource to be allocated in response to the resource allocation request.

Example 2 includes the apparatus of example 1, wherein the dependency between the first and second cloud resources is based on property bindings of the first and second cloud resources.

Example 3 includes the apparatus of example 1, wherein programmable circuitry is to generate a directed graph, the directed graph to represent the dependency between the first and second cloud resources.

Example 4 includes the apparatus of example 3, wherein the directed graph includes a first node, a second node, and an edge, the first node to represent the first cloud resource, the second node to represent the second cloud resource, the edge to represent the dependency between the first cloud resource and the second cloud resource.

Example 5 includes the apparatus of example 4, wherein the dependency between the first cloud resource and the second cloud resource is based on binding of an implicit property, the implicit property set to the same value in the first cloud resource and the second cloud resource.

Example 6 includes the apparatus of example 5, wherein the implicit property includes at least one of a region value, an account value, or an image identification value.

Example 7 includes the apparatus of example 1, wherein the programmable circuitry is to determine the cloud provider by extracting dependent resource types, the dependent resource types depending from the first cloud resource, determining a cloud account type for the extracted dependent resource types, removing duplicate cloud account types from a listing of the determined cloud account type for each of the extracted dependent resource types, and determining the cloud provider based on the cloud account type.

Example 8 includes a non-transitory machine readable storage medium comprising instructions to cause programmable circuitry to at least generate a self-contained dependency descriptor property based on a dependency between a first cloud resource and a second cloud resource, receive a resource allocation request, the resource allocation request indicative of a first cloud resource account type, the resource allocation request not specific to a cloud provider, based on the self-contained dependency descriptor property, determine a second cloud resource account type to satisfy the resource allocation request, determine the cloud provider based on a first resource type and a second resource type, and determine a cloud resource based on the cloud provider, the cloud resource to be allocated in response to the resource allocation request.

Example 9 includes the non-transitory machine readable storage medium of example 8, wherein the dependency between the first and second cloud resources is based on property bindings of the first and second cloud resources.

Example 10 includes the non-transitory machine readable storage medium of example 8, wherein the instructions are to cause programmable circuitry to generate a directed graph, the directed graph to represent the dependency between the first and second cloud resources.

Example 11 includes the non-transitory machine readable storage medium of example 10, wherein the directed graph includes a first node, a second node, and an edge, the first node to represent the first cloud resource, the second node to represent the second cloud resource, the edge to represent the dependency between the first cloud resource and the second cloud resource.

Example 12 includes the non-transitory machine readable storage medium of example 11, wherein the dependency between the first cloud resource and the second cloud resource is based on binding of an implicit property, the implicit property set to the same value in the first cloud resource and the second cloud resource.

Example 13 includes the non-transitory machine readable storage medium of example 12, wherein the implicit property includes at least one of a region value, an account value, or an image identification value.

Example 14 includes the non-transitory machine readable storage medium of example 8, wherein the instructions are to cause the programmable circuitry to determine the cloud provider by extracting dependent resource types, the dependent resource types depending from the first cloud resource, determining a cloud account type for the extracted dependent resource types, removing duplicate cloud account types from a listing of the determined cloud account type for each of the extracted dependent resource types, and determining the cloud provider based on the cloud account type.

Example 15 includes a method comprising generating, by executing an instruction with programmable circuitry, a self-contained dependency descriptor based on a dependency between a first cloud resource and a second cloud resource, receiving a resource allocation request, the resource allocation request indicative of a first cloud resource account type, the resource allocation request not specific to a cloud provider, based on the self-contained dependency descriptor property, determining, by executing an instruction with programmable circuitry, a second cloud resource account type to satisfy the resource allocation request, determining, by executing an instruction with programmable circuitry, the cloud provider based on a first resource type and a second resource type, and determining, by executing an instruction with programmable circuitry, a cloud resource based on the cloud provider, the cloud resource to be allocated in response to the resource allocation request.

Example 16 includes the method of example 15, wherein the dependency between the first and second cloud resources is based on property bindings of the first and second cloud resources.

Example 17 includes the method of example 15, further including generating a directed graph, the directed graph to represent the dependency between the first and second cloud resources.

Example 18 includes the method of example 17, wherein the directed graph includes a first node, a second node, and an edge, the first node to represent the first cloud resource, the second node to represent the second cloud resource, the edge to represent the dependency between the first cloud resource and the second cloud resource.

Example 19 includes the method of example 18, wherein the dependency between the first cloud resource and the second cloud resource is based on binding of an implicit property, the implicit property set to the same value in the first cloud resource and the second cloud resource.

Example 20 includes the method of example 19, wherein the implicit property includes at least one of a region value, an account value, or an image identification value.

Example 21 includes the method of example 15, wherein the determining of the cloud provider includes extracting dependent resource types, the dependent resource types depending from the first cloud resource, determining a cloud account type for the extracted dependent resource types, removing duplicate cloud account types from a listing of the determined cloud account type for each of the extracted dependent resource types, and determining the cloud provider based on the cloud account type.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method comprising:
generating, by executing an instruction with programmable circuitry, a self-contained dependency descriptor based on a dependency between a first cloud resource and a second cloud resource;
receiving a resource allocation request, the resource allocation request indicative of a first cloud resource account type, the resource allocation request not specific to a cloud provider;
based on the self-contained dependency descriptor property, determining, by executing an instruction with programmable circuitry, a second cloud resource account type to satisfy the resource allocation request;
determining, by executing an instruction with programmable circuitry, the cloud provider based on a first resource type and a second resource type; and
determining, by executing an instruction with programmable circuitry, a cloud resource based on the cloud provider, the cloud resource to be allocated in response to the resource allocation request.

2. The method of claim 1, wherein
the dependency between the first and second cloud resources is based on property bindings of the first and second cloud resources.

3. The method of claim 1 or 2, further including
generating a directed graph, the directed graph to represent the dependency between the first and second cloud resources.

4. The method of claim 3, wherein
the directed graph includes a first node, a second node, and an edge, the first node to represent the first cloud resource, the second node to represent the second cloud resource, the edge to represent the dependency between the first cloud resource and the second cloud resource.

5. The method of claim 4, wherein
the dependency between the first cloud resource and the second cloud resource is based on binding of an implicit property, the implicit property set to the same value in the first cloud resource and the second cloud resource.

6. The method of claim 5, wherein
the implicit property includes at least one of a region value, an account value, or an image identification value.

7. The method of any one of the claims 1 to 6, wherein
the determining of the cloud provider includes:
extracting dependent resource types, the dependent resource types depending from the first cloud resource;
determining a cloud account type for the extracted dependent resource types;
removing duplicate cloud account types from a listing of the determined cloud account type for each of the extracted dependent resource types; and
determining the cloud provider based on the cloud account type.

8. An apparatus to analyze resource dependencies, the apparatus comprising:
interface circuitry;
machine readable instructions; and
programmable circuitry to at least one of instantiate or execute the machine readable instructions to control and/or carry out a method as set forth in any one of the preceding method claims.

9. A non-transitory machine readable storage medium comprising instructions to cause programmable circuitry to control and/or carry out a method as set forth in any one of the preceding method claims.
